# EUROPEAN PATENT SPECIFICATION

(11) **EP 3 994 825 B1**
(45) Date of publication and mention of the grant of the patent: **18.02.2026**
(21) Application number: 19737595.9
(22) Date of filing: 03.07.2019
(51) Int. Cl.: H04L 5/00, H04L 5/14

(54) **CONTROLLING DATA ON A FULL-DUPLEX FRONTHAUL LINK**
STEUERUNG VON DATEN ÜBER EINE VOLLDUPLEX-FRONTHAUL-VERBINDUNG
COMMANDE DE DONNÉES SUR UNE LIAISON FRONTHAUL EN DUPLEX INTÉGRAL

(43) Date of publication of application: 11.05.2022
(73) Proprietor: TELEFONAKTIEBOLAGET LM ERICSSON (PUBL), 164 83 Stockholm (SE)
(72) Inventor: TROJER, Elmar, 187 54 Täby (SE); BERG, Miguel, 191 41 Sollentuna (SE)
(74) Representative: Ericsson
(86) International application number: PCT/SE2019/050661
(87) International publication number: WO 2021/002786

(56) References cited:
- EP-A1- 1 858 276
- EP-A1- 2 739 105
- EP-B1- 2 739 105
- ERICSSON ET AL: "CPRI Specification V6.1 (2014-07-01) Common Public Radio Interface (CPRI); Interface Specification", 1 July 2014 (2014-07-01), XP055312785, Retrieved from the Internet <URL:http://www.cpri.info/downloads/CPRI_v_6_1_2014-07-01.pdf> [retrieved on 20161020]

## Description

### TECHNICAL FIELD

The present disclosure relates to the field of cellular networks, and in particular to an aggregator device and baseband device for controlling data on a full-duplex fronthaul link.

### BACKGROUND

Cellular radio networks like LTE (Long-term Evolution) and NR (New Radio) can operate in different duplexing modes for supporting both UL (uplink) and DL (downlink), such as frequency division duplexing (FDD) and time division duplexing (TDD). In FDD, downlink and uplink carriers are separated in frequency, in which case the transmission in uplink and downlink can occur in parallel (full-duplex operation), and interference can be mitigated by filtering.

With TDD, downlink and uplink transmission are on the same frequency, but multiplexed in time. Switching transmission direction over time is called half-duplex operation as only one of DL and UL is active at a given point in time (except the guard period where direction switching is happening). UL data rate and DL data rate can be configured to be symmetric or asymmetric, depending on network support.

An aggregator device is provided between a baseband device and the radio devices to be an interface between a single fronthaul link and individual radio device links. The fronthaul link is full-duplex, supporting simultaneous transmission of the data received and transmitted by the radio devices.

Hence, cellular TDD radio systems can operate in half-duplex mode whereas the corresponding fronthaul links operate in full-duplex mode. Different asymmetry ratios as well as uplink or pure downlink transmission can occur. In NR, flexible mini-slot transmission as well as delayed listen-before-talk (LBT) operation are supported by the framing structure.

Fronthaul links are a costly resource and should be utilised as much as possible. In LTE and NR, the fronthaul links are mostly implemented using optical communication on dedicated fibre infrastructure. In order to support maximum radio throughput over TDD radio, the fronthaul links are often over-dimensioned, which is a costly network design.

EP 2 739 105 discloses am apparatus, a method, and a computer program for a central unit of a base station transceiver. EP 1 858 276 discloses an interface for efficiently transmitting digital signals.

### SUMMARY

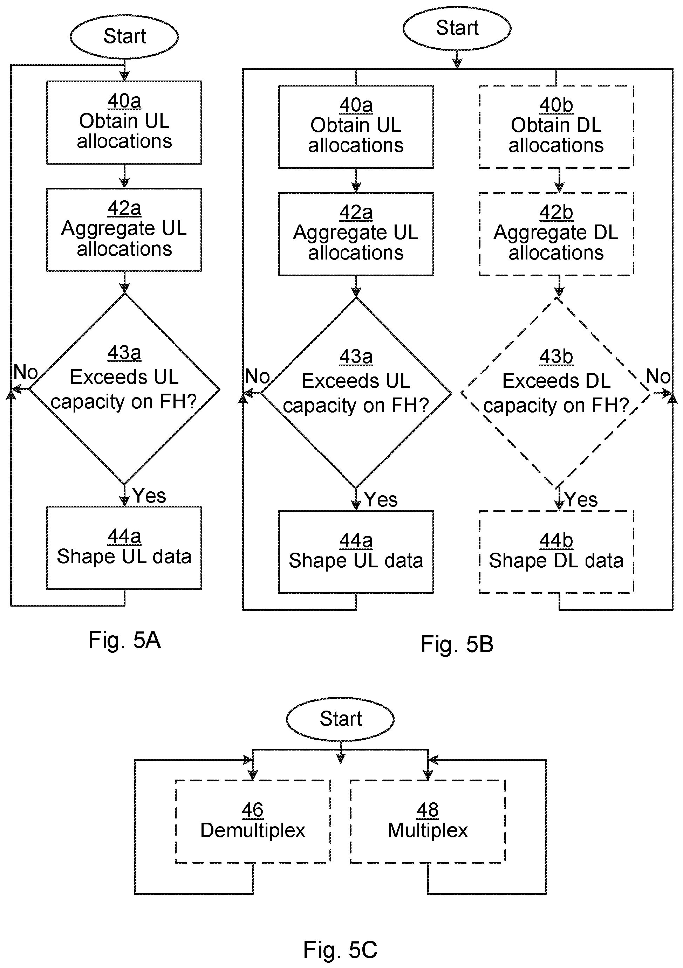

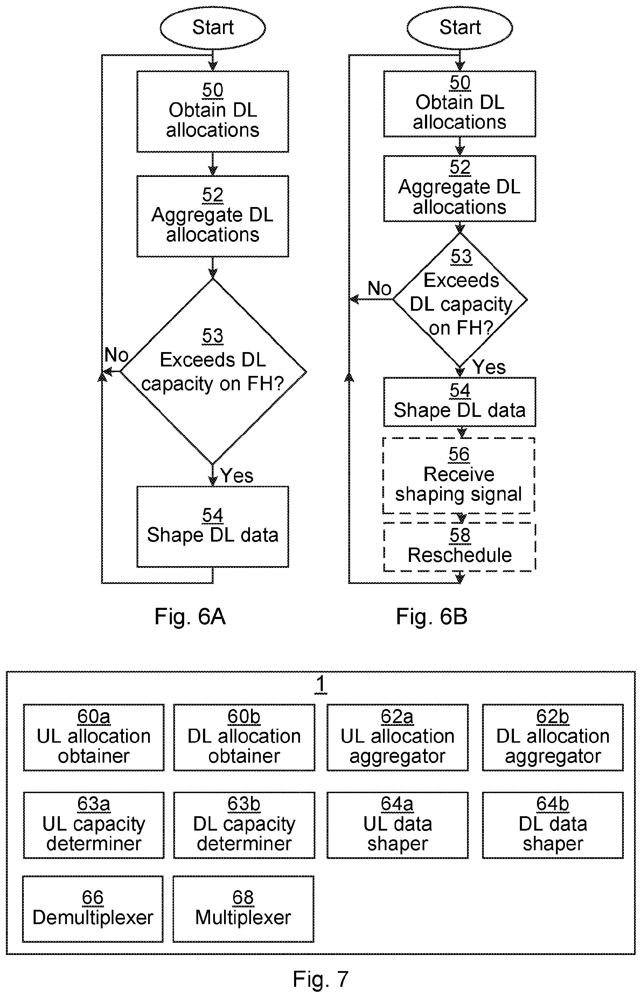

The invention is defined in the appended claims. Figs. 5A/C and 6B are important for understanding the invention. One objective is to improve utilisation of fronthaul links in TDD systems.

According to a first aspect, it is provided a method for controlling data on a full-duplex fronthaul link. The method is performed in an aggregator device and comprises the steps of: obtaining uplink data allocations per time period for at least two radio layers, the at least two radio layers being time-division duplex, TDD, radio layers, and the at least two radio layers being transmitted from at least one radio device; aggregating uplink data allocations per time period, yielding aggregated uplink TDD data; and when the uplink TDD data exceeds an uplink capacity of the full-duplex fronthaul link, shaping uplink data of at least one of the at least two radio layers for the full-duplex fronthaul link.

The method mayfurther comprise the steps of: obtaining downlink data allocations per time period for each radio layer; aggregating downlink data allocations per time period, yielding aggregated downlink TDD data; and when the downlink TDD data exceeds a downlink capacity of the full-duplex fronthaul link, shaping downlink data for at least one of the at least two radio layers for the full-duplex fronthaul link.

The shaping may involve transmitting a shaping signal to a baseband device to reschedule data allocations between time periods.

The shaping may involve buffering data in the aggregator device.

The amount of data allocations may be based on modulation and coding schemes used on the at least two TDD radio layers.

The shaping may comprise redistributing data over time to, to the greatest extent possible, fit the data of the radio layers within the capacity of the full-duplex fronthaul link.

The method may further comprise the steps of: demultiplexing downlink data received over the full-duplex fronthaul link and forwarding the demultiplexed data to respective radio devices; and multiplexing uplink data received from the at least two radio devices and forwarding the data on the full-duplex fronthaul link.

According to a second aspect, it is provided an aggregator device for controlling data on a full-duplex fronthaul link. The aggregator device comprises: a processor; and a memory storing instructions that, when executed by the processor, cause the aggregator device to: obtain uplink data allocations per time period for at least two radio layers, the at least two radio layers being time-division duplex, TDD, radio layers, and the at least two radio layers being transmitted from at least one radio device; aggregate uplink data allocations per time period, yielding aggregated uplink TDD data; and when the uplink TDD data exceeds an uplink capacity of the full-duplex fronthaul link, shape uplink data of at least one of the at least two radio layers for the full-duplex fronthaul link.

The aggregator device may further comprise instructions that, when executed by the processor, cause the aggregator device to: obtain downlink data allocations per time period for each radio layer; aggregate downlink data allocations per time period, yielding aggregated downlink TDD data; and when the downlink TDD data exceeds a downlink capacity of the full-duplex fronthaul link, shape downlink data for at least one of the at least two radio layers for the full-duplex fronthaul link.

The shaping may involve transmitting a shaping signal to a baseband device to reschedule data allocations between time periods.

The shaping may involve buffering data in the aggregator device.

The amount of data allocations may be based on modulation and coding schemes used on the at least two TDD radio layers.

The shaping may comprise redistributing data over time to, to the greatest extent possible, fit the data of the radio layers within the capacity of the full-duplex fronthaul link.

The aggregator device may further comprise instructions that, when executed by the processor, cause the aggregator device to: demultiplex downlink data received over the full-duplex fronthaul link and forwarding the demultiplexed data to respective radio devices; and multiplex uplink data received from the at least two radio devices and forwarding the data on the full-duplex fronthaul link.

According to a third aspect, it is provided a computer program for controlling data on a full-duplex fronthaul link. The computer program may comprise computer program code which, when run on a aggregator device causes the aggregator device to: obtain uplink data allocations per time period for at least two radio layers, the at least two radio layers being time-division duplex, TDD, radio layers, and the at least two radio layers being transmitted from at least one radio device; aggregate uplink data allocations per time period, yielding aggregated uplink TDD data; and when the uplink TDD data exceeds an uplink capacity of the full-duplex fronthaul link, shape uplink data of at least one of the at least two radio layers for the full-duplex fronthaul link.

According to a fourth aspect, it is provided a computer program product comprising a computer program according to the third aspect and a computer readable means on which the computer program is stored.

According to a fifth aspect, it is provided a method for controlling data on a full-duplex fronthaul link. The method is performed in a baseband device and comprises the steps of: obtaining downlink data allocations per time period for at least two radio layers, the at least two radio layers being time-division duplex, TDD, radio layers, and the at least two radio layers being transmitted from at least one radio device; aggregating downlink data allocations per time period, yielding aggregated downlink TDD data; and when the downlink TDD data exceeds a downlink capacity of a full-duplex fronthaul link, shaping downlink data from the radio layers of the at least two radio layers for the full-duplex fronthaul link.

The method may further comprise the steps of: receiving a shaping signal from an aggregator device to reschedule data allocations between time periods; and rescheduling data allocations between time periods.

According to a sixth aspect, it is provided a baseband device for controlling data on a full-duplex fronthaul link. The baseband device comprises: a processor; and a memory storing instructions that, when executed by the processor, cause the baseband device to: obtain downlink data allocations per time period for at least two radio layers, the at least two radio layers being time-division duplex, TDD, radio layers, and the at least two radio layers being transmitted from at least one radio device; aggregate downlink data allocations per time period, yielding aggregated downlink TDD data; and when the downlink TDD data exceeds a downlink capacity of a full-duplex fronthaul link, shape downlink data from the radio layers of the at least two radio layers for the full-duplex fronthaul link.

The baseband device may further comprise instructions that, when executed by the processor, cause the baseband device to: receive a shaping signal from an aggregator device to reschedule data allocations between time periods; and reschedule data allocations between time periods.

According to a seventh aspect, it is provided a computer program for controlling data on a full-duplex fronthaul link. The computer program comprises computer program code which, when run on a baseband device causes the baseband device to: obtain downlink data allocations per time period for at least two radio layers, the at least two radio layers being time-division duplex, TDD, radio layers, and the at least two radio layers being transmitted from at least one radio device; aggregate downlink data allocations per time period, yielding aggregated downlink TDD data; and when the downlink TDD data exceeds a downlink capacity of a full-duplex fronthaul link, shape downlink data from the radio layers of the at least two radio layers for the full-duplex fronthaul link.

According to an eighth aspect, it is provided a computer program product comprising a computer program according to the seventh aspect and a computer readable means on which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig 1 is a schematic diagram illustrating a cellular network 8 in which embodiments presented herein can be applied;
Figs 2A-C are schematic diagrams illustrating how traffic shaping can improve the throughput on the fronthaul link of Fig 1;
Figs 3 and 4 are schematic diagrams illustrating how shaping of traffic can be employed for better throughput over the fronthaul link;
Figs 5A-C are flow charts illustrating embodiments of methods performed in the aggregator device for controlling data on a full-duplex fronthaul link;
Figs 6A-B are flow charts illustrating embodiments of methods performed in the baseband device for controlling data on a full-duplex fronthaul link;
Fig 7 is a schematic diagram showing functional modules of the aggregator device of Fig 1 according to one embodiment;
Fig 8 is a schematic diagram showing functional modules of the baseband device of Fig 1 according to one embodiment; and
Fig 9 shows one example of a computer program product comprising computer readable means.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

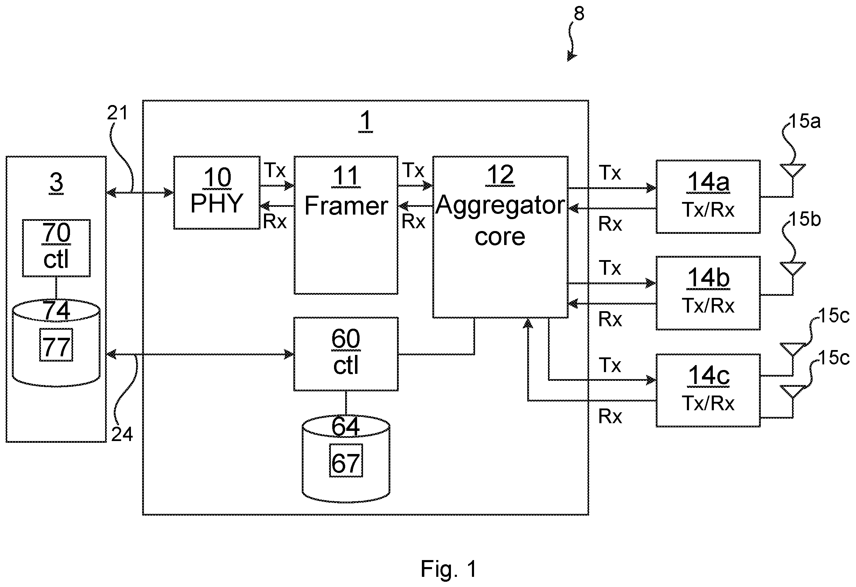

Fig 1 is a schematic diagram illustrating a cellular network 8 in which embodiments presented herein can be applied. The cellular communication network 8 may e.g. comply with any one or a combination of 5G NR (New Radio), LTE (Long Term Evolution), LTE Advanced, W-CDMA (Wideband Code Division Multiplex), EDGE (Enhanced Data Rates for GSM (Global System for Mobile communication) Evolution), GPRS (General Packet Radio Service), CDMA2000 (Code Division Multiple Access 2000), or any other current or future wireless network, as long as the principles described hereinafter are applicable.

A number of radio devices 14a-c comprise respective transmitters and receivers for communicating with one or more user devices, e.g. in the form of any one or more a mobile communication terminal, user equipment (UE), mobile terminal, user terminal, user agent, wireless terminal, machine-to-machine device etc., and can be, for example, what today are commonly known as a mobile phone, smart phone or a tablet/laptop with wireless connectivity. Communication in a direction towards the user devices is denoted downlink (DL) and communication in a direction towards more centrally located equipment is denoted uplink (UL).

The first radio device 14a and the second radio device 14b are configured to use TDD (Time Division Duplex) and their antennas 15a-b are each used for both DL and UL, where DL and UL are in the same frequency band, but are allocated different time periods. The third radio device 14c is configured to use FDD (Frequency Division Duplex) where DL and UL are separated into different frequency bands, and can thus be active simultaneously. The third radio device 14c can be provided with multiple antennas 15c for simultaneous use of the different frequency bands. It is to be noted that any radio device 14a-c can have one or multiple antennas (regardless if FDD or TDD is used). The different antennas can be used for UL/DL diversity, MIMO (Multiple-Input and Multiple-Output)/beamforming (in same frequency band), or multiple carriers in different frequency bands (with and without carrier aggregation). The structure shown in Fig 1 is just an example.

One or more baseband devices 3 are used for baseband processing in the cellular network, as known in the art per se. The baseband device 3 comprises a processor 70, which is provided using any combination of one or more of a suitable central processing unit (CPU), multiprocessor, microcontroller, digital signal processor (DSP), etc., capable of executing software instructions 77 stored in a memory 74, which can thus be a computer program product. The processor 70 could alternatively, or additionally, be implemented using an application specific integrated circuit (ASIC), field programmable gate array (FPGA), etc. The processor 70 can be configured to execute the methods described with reference to Figs 6A-B below.

The memory 74 can be any combination of random-access memory (RAM) and/or read-only memory (ROM). The memory 74 also comprises persistent storage, which, for example, can be any single one or combination of magnetic memory, optical memory, solid-state memory or even remotely mounted memory. The memory 74 can also comprise a data memory for reading and/or storing data during execution of software instructions in the processor 70.

An aggregator device 1 is used for multiplexing and demultiplexing between a fronthaul link 21 to the baseband device 3 and individual links to the radio devices. The aggregator device comprises a physical interface (PHY) 10 for interfacing with the fronthaul link 21 on one side and supporting transmission (Tx) and reception (Rx) connections on the other side. Corresponding physical interfaces (not shown) are provided towards the radio devices 14a-c. The fronthaul link 21 is a full-duplex fronthaul link and can e.g. be based on CPRI (Common Public Radio Interface), evolved CPRI (eCPRI) or any other suitable standard, such as a packet network based on Ethernet, IP (Internet Protocol), multiprotocol label switching (MPLS) or similar. The fronthaul link can be based on an optical, electrical, or wireless transmission medium such as microwave. The full-duplex operation of the fronthaul link can e.g. be achieved using echo cancellation (near-end/far-end crosstalk mitigation) on electrical interfaces or by duplex fibred (one fibre per direction) or on single fibre utilising bi-directional optics, separating downlink from uplink by using different wavelengths. It is to be noted that the fronthaul link 21 can be based on a network between the aggregator device 1 and the baseband device 3. In any case, the fronthaul link 21 supports high-capacity full-duplex communication between the baseband device 3 and the aggregator device 1 either directly or as a segment of a fronthaul network.

A framer 11 establishes the fronthaul transmission framing used on the fronthaul link 21. An aggregator core 12 is provided for the multiplexing and demultiplexing for the links with the individual radio devices 14a-c.

The aggregator device 1 further comprises a processor 60, which is provided using any combination of one or more of a suitable central processing unit (CPU), multiprocessor, microcontroller, digital signal processor (DSP), etc., capable of executing software instructions 67 stored in a memory 64, which can thus be a computer program product. The processor 60 could alternatively, or additionally, be implemented using an application specific integrated circuit (ASIC), field programmable gate array (FPGA), etc. The processor 60 can also communicate with the baseband device 3 over a control link 24. This allows the processor 60 of the aggregator device 1 to obtain allocation and scheduling information such as UL/DL framing parameters, radio resource and medium access scheduling, modulation and coding schemes (MCS) and similar, used by the radio devices 14a-c. The allocation and scheduling information can be used to determine when there is a risk for insufficient capacity on the fronthaul link 21. The processor 60 can be configured to execute the methods described with reference to Figs 5A-C below.

The memory 64 can be any combination of random-access memory (RAM) and/or read-only memory (ROM). The memory 64 also comprises persistent storage, which, for example, can be any single one or combination of magnetic memory, optical memory, solid-state memory or even remotely mounted memory. The memory 64 can also comprise a data memory for reading and/or storing data during execution of software instructions in the processor 60.

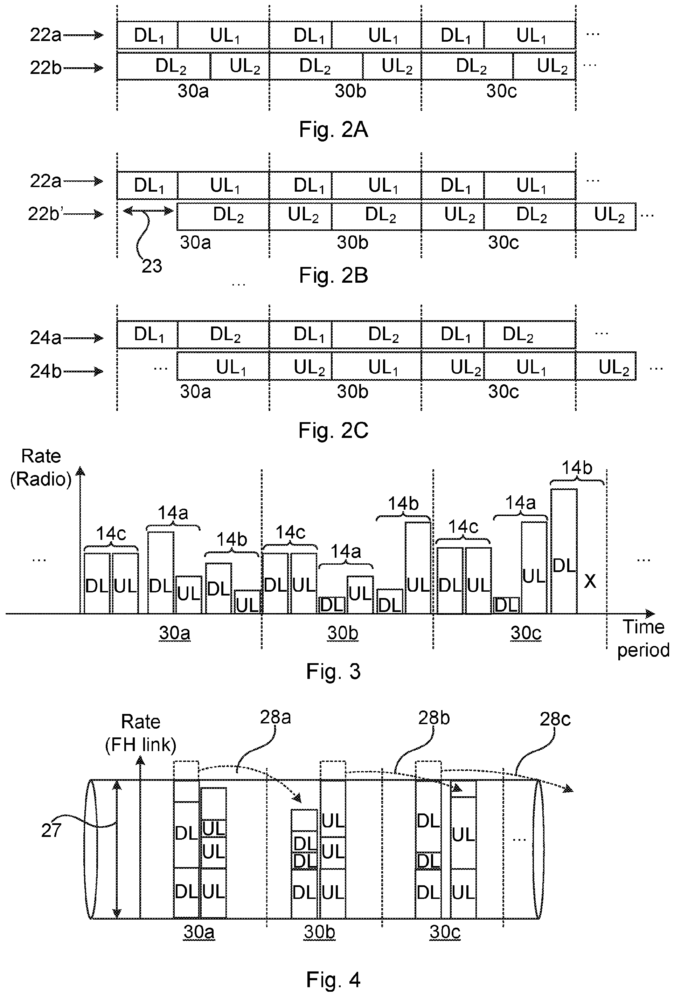

Figs 2A-C are schematic diagrams illustrating how traffic shaping can improve the throughput on the fronthaul link 21 of Fig 1. In this example, there are three time periods 30a-c shown, a first time period 30a, a second time period 30b and a third time period 30c. Whenever the term time period is used herein, the time period can be different for different implementations, but is consistent for embodiments presented herein of the same implementation. For instance, the time period can be (multiples of) radio frames, sub-frames, slots, modulation symbol periods (e.g. OFDM (Orthogonal Frequency-Division Multiplexing) symbol periods) etc .

Looking first at Fig 2A, there is a first TDD schedule 22a for a radio layer of the first radio device (14a of Fig 1). There is also a second TDD schedule 22b for a radio layer of the second radio device (14b of Fig 1). Each radio layer can represent a carrier, a MIMOlayer, a beam-forming layer, etc. It is to be noted that the different layers can be for separate radio devices or different layers of the same radio device.

The first TDD schedule 22a is transmitted can be transmitted on a first frequency and the second TDD schedule 22b can be transmitted on a second frequency. The first frequency and the second frequency should not be adjacent to minimise interference due to leakage. Alternatively, the TDD schedules 22a-b can be transmitted in different MIMO layers on the same frequency.

The first TDD schedule 22a contains first downlink periods DL1 and first uplink periods UL1. The second TDD schedule 22b contains second downlink periods DL2 and second uplink periods UL2. If these two TDD schedules 22a-b are aggregated on a single fronthaul link, there are significant time spans where there are both first downlink periods DL1 and second downlink periods DL2, as well as other time spans where there are both first uplink periods UL1 and second uplink periods UL2. If these TDD schedules are aggregated according to what is shown in Fig 2A, the capacity requirements will be accumulated for the different TDD schedules, leading to excessive capacity usage on the fronthaul link, which should be avoided if possible.

One solution to this problem is to reschedule the second TDD schedule 22b to a time shifted second TDD schedule 22b' as shown in Fig 2B by applying a time shift 23. By shifting the second TDD schedule, at any one point in time, there is now only one of the downlink periods DL1/DL2 and only one of the uplink periods UL1/UL2. The rescheduling can be implemented by the baseband module or by buffering in the aggregator device.

Fig 2C is the equivalent to Fig 2B in time, but here the downlink periods DL1, DL2 are aggregated on a downlink aggregation 24a and the uplink periods UL1, UL2 are aggregated on an uplink aggregation 24b. The downlink aggregation 24a can then be transmitted over the downlink channel of the fronthaul link and the uplink aggregation 24b can be transmitted over the uplink channel of the fronthaul link.

In the scenario illustrated in Figs 2A-C, the UL and DL of the two radio layers match perfectly, so that the UL allocation of one radio layer matches the DL allocation of the other radio layer in time. In this case, the time shift achieves perfect matching, which minimises capacity requirements on the fronthaul link. The same situation occurs if there are two radio layers with symmetric UL and DL.

Figs 3 and 4 are schematic diagrams illustrating how shaping of traffic can be employed for better throughput over the fronthaul link as an extension of the concept in FIG 2A-C. This shaping will now be described with reference to both Fig 3 and Fig 4, with corresponding time periods 30a, 30b and 30c.

In each of the time periods of Fig 3, it is shown the scheduled data rate (in data units per time period) in DL and UL in radio for the first radio device 14a, the second radio device 14b and the third radio device 14c. In the third time period 30c, there is only DL data for the second radio device 14b, e.g. due to licence-assisted access, LAA. LAA implies DL-only sharing in unlicensed spectrum, using listen-before-talk. Also, supplementary uplink (SUL) and/or supplementary downlink (SDL) could be in the mix of radio layers. SUL and SDL are used in the same way s LAA but in licensed band and thus without LBT (which can cause possible delays). SUL and SDL are UL or DL only radio layers, and carrier-aggregated to an anchor primary carrier. Both the first and second radio devices 14a-b utilise TDD and the third radio device 14c utilises FDD.

Looking now to Fig 4, the DL data and UL data is separately accumulated in each time period 30a-c for the fronthaul link (schematically shown as a pipe, even though there is separate capacity for DL and UL). The capacity 27 (e.g. in Gbit/s) of the fronthaul link is illustrated as the size of the pipe and can be different for UL and DL.

In the first time period 30a, the aggregated DL data exceeds the capacity 27. However, there is spare DL capacity in the second time period 30b. Hence, some or all of the excess DL data from the first time period is moved 28a to the second time period 30b. This allows all (or at least more of) the DL data to be transferred over the fronthaul link within its capacity 27. Similarly, in the second time period 30b, the aggregated UL data exceeds the capacity 27. However, there is spare UL capacity in the third time period 30c. Hence, some or all of the excess UL data from the second time period is moved 28b to the third time period 30b. Excess DL data in the third period 30c can be moved 28c to the next period, etc.

The moving of data can be achieved by the aggregator device signalling to the baseband device, or by the aggregator buffering data between time periods. In other words, the data can be buffered, stored and delayed to achieve better throughput over the fronthaul link. It is to be noted that moving of both DL data and UL data can be performed in the aggregator device. Alternatively, the aggregator device moves UL data and the baseband device moves DL data. The moving of data can be implemented between adjacent time periods only, to reduce latency issues. Alternatively, data can be moved more freely across multiple time periods (larger processing window) to improve throughput and reduce the risk of having to discard data, at the price of possibly increased latency.

Data that can not be fit within the capacity 27 even when moved, has to be discarded, which higher layers will need to manage with retransmissions, etc..

Figs 5A-C are flow charts illustrating embodiments of methods for controlling data on a full-duplex fronthaul link. These embodiments are performed in an aggregator device.

In an *obtain UL allocations* step 40a, the aggregator device obtains uplink data allocations per time period for at least two radio layers. The at least two radio layers are TDD radio layers. Furthermore, the at least two radio layers are transmitted from at least one radio device.

In an *aggregate UL allocations* step 42a, the aggregator device aggregates uplink data allocations per time period. This yields aggregated uplink TDD data with a time-period granularity.

In a conditional *exceeds UL capacity on FH* step 43a, the aggregator device determines when the uplink TDD data exceeds an uplink capacity of the full-duplex fronthaul link (in at least one time period). When this is the case, the method proceeds to a *shape UL data* step 44a. Otherwise, the method returns to the *obtain Ul allocations* step 40a.

In the *shape UL data* step 44a, the aggregator device shapes uplink data of at least one of the at least two radio layers for the full-duplex fronthaul link.

Looking now to Fig 5B, only new or modified steps compared to the steps of Fig 5A will be described. In Fig 5B, the shaping determination for the uplink of Fig 5A is also applied in corresponding steps for the downlink.

In an optional *obtain DL allocations* step 40b, the aggregator device obtains downlink data allocations per time period for each radio layer.

In an optional *aggregate DL allocations* step 42b, the aggregator device aggregates downlink data allocations per time period. This aggregation yields aggregated downlink TDD data, with a time-period granularity.

In an optional conditional *exceeds DL capacity on FH* step 43b, the aggregator device determines when the downlink TDD data exceeds a downlink capacity of the full-duplex fronthaul link. When this is the case, the method proceeds to an optional *shape DL data* step 44b. Otherwise, the method returns to the *obtain DL allocations* step 40b.

In the optional *shape DL data* step 44b, the aggregator device shapes downlink data for at least one of the at least two radio layers for the full-duplex fronthaul link.

It is to be noted that steps 40b, 42b, 43b and 44b can be performed in a different execution sequence (e.g. different processor core, process, thread, etc) in the aggregation device than the steps of Fig 5A.

The shaping in steps 44a and 44b can occur in different ways, e.g. as exemplified in Figs 2-4 and described above. The shaping can contain buffering data, aggregating data and discarding data if necessary.

In one embodiment, the shaping involves transmitting a shaping signal to a baseband device to reschedule data allocations between time periods.

In one embodiment, the shaping involves buffering data in the aggregator device.

The amount of data allocations (which is used in steps 44a and 44b), e.g. expressed in Gbit/s, can be based on modulation and coding schemes used on the at least two TDD radio layers.

In one embodiment the shaping comprises redistributing data over time to, to the greatest extent possible, fit the data of the radio layers within the capacity of the full-duplex fronthaul link.

The obtaining of allocations in steps 40a and 40b, can be implemented by the aggregator device requesting this information from the baseband device and/or the radio device(s). Furthermore, MCS can be used to determine the number of data units (e.g. bits or bytes) which are allocated in each time period.

Looking now to Fig 5C this illustrates the multiplexing and demultiplexing which can optionally be performed by the aggregator device.

In an optional *demultiplex* step 46, the aggregator device demultiplexes downlink data received over the full-duplex fronthaul link and forwards the demultiplexed data to respective radio layers in one or more radio devices.

In an optional *multiplex* step 48, the aggregator device multiplexes uplink data received from at least two radio layers of one or more radio devices and forwards the data on the full-duplex fronthaul link.

It is to be noted that steps 46 and 48 can be performed in a different hardware or execution sequence in the aggregation device than the steps of Fig 5A and/or Fig 5B.

Figs 6A-B are flow charts illustrating embodiments of methods for controlling data on a full-duplex fronthaul link. The embodiments are performed in a baseband device.

In an *obtain DL allocations* step 50, the baseband device obtains downlink data allocations per time period for at least two radio layers. The at least two radio layers are TDD radio layers. The at least two radio layers are transmitted from at least one radio device.

In an *aggregate DL allocations* step 52, the baseband device aggregates downlink data allocations per time period. This yields aggregated downlink TDD data with a time-period granularity.

In a conditional *exceeds DL capacity on FH* step 53, the baseband device determines when the downlink TDD data exceeds a downlink capacity of a full-duplex fronthaul link.

In a *shape DL data* step 54, the baseband device shapes downlink data from the radio layers of the at least two radio layers for the full-duplex fronthaul link.

Looking now to Fig 6B, only new or modified steps compared to those illustrated in Fig 6A will be described.

In a *receive shaping signal* step 56, the baseband device receives a shaping signal from an aggregator device to reschedule data allocations between time periods.

In a *reschedule* step 58, the baseband device reschedules data allocations between time periods, in accordance with the shaping signal received in step 56.

Adjusting the timing in baseband device or buffering data in the aggregator device give different results, but these embodiments can be combined as described above.

Buffering is limited by the maximum allowed fronthaul latency (typically below 100 us) but does not have any problems with adjacent TDD bands since the timing alignment at the antenna is not impacted. Due to the strict latency requirements for fronthaul, buffering would work best when the TDD period is short (e.g. 5G NR on millimetre wave bands where subcarrier spacing is large and slots are short).

Adjusting the timing in the baseband device does not have the same latency restrictions, but it changes the timing alignment at the antenna reference point. If adjacent TDD bands have different timing, there can be near-far problems caused by spectral leakage and non-ideal filters. Timing adjustment could be used for any TDD period size.

Fig 7 is a schematic diagram showing functional modules of the aggregator device 1 of Fig 1 according to one embodiment. The modules are implemented using software instructions such as a computer program executing in the aggregator device 1. Alternatively or additionally, the modules are implemented using hardware, such as any one or more of an ASIC (Application Specific Integrated Circuit), an FPGA (Field Programmable Gate Array), or discrete logical circuits. The modules correspond to the steps in the methods illustrated in Figs 5A-5C.

An UL allocation obtainer 60a corresponds to step 40a. A DL allocation obtainer 60b corresponds to step 40b. An UL allocation aggregator 62a corresponds to step 42a. A DL allocation aggregator 62b corresponds to step 42b. An UL capacity determiner 63a corresponds to step 43a. A DL capacity determiner 63b corresponds to step 43b. An UL data shaper 64a corresponds to step 44a. A DL data shaper 64b corresponds to step 44b. A demultiplexer 66, corresponds to step 46. A multiplexer 68 corresponds to step 48.

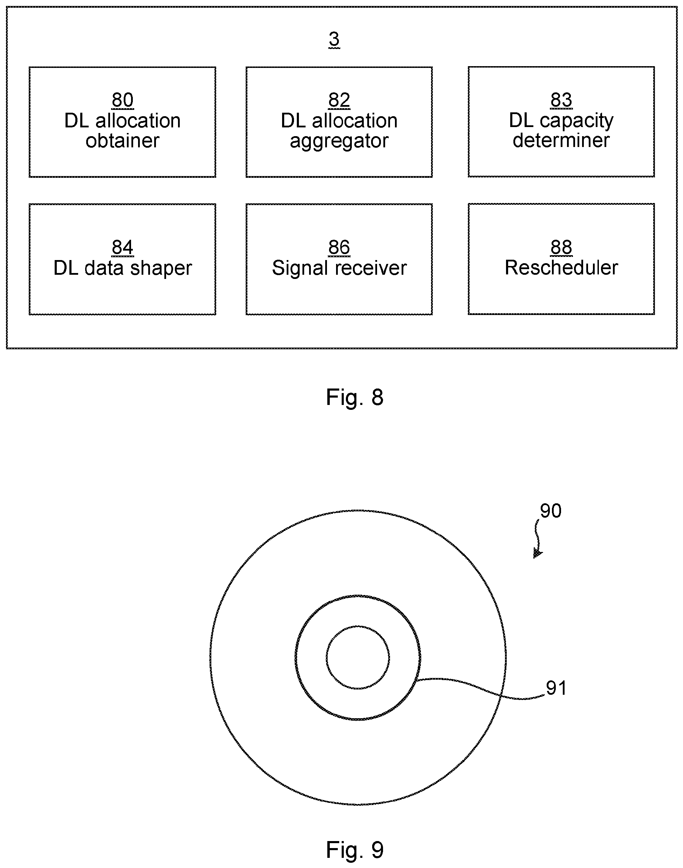

Fig 8 is a schematic diagram showing functional modules of the baseband device 3 of Fig 1 according to one embodiment. The modules are implemented using software instructions such as a computer program executing in the baseband device 3. Alternatively or additionally, the modules are implemented using hardware, such as any one or more of an ASIC (Application Specific Integrated Circuit), an FPGA (Field Programmable Gate Array), or discrete logical circuits. The modules correspond to the steps in the methods illustrated in Figs 6A and 6B.

A DL allocation obtainer 80 corresponds to step 50. A DL allocation aggregator 82 corresponds to step 52. A DL capacity determiner 83 corresponds to step 53. A DL data shaper 84 corresponds to step 54. A signal receiver 86 corresponds to step 56. A rescheduler 88 corresponds to step 58.

Fig 9 shows one example of a computer program product comprising computer readable means. On this computer readable means, a computer program 91 can be stored, which computer program can cause a processor to execute a method according to embodiments described herein. In this example, the computer program product is an optical disc, such as a CD (compact disc) or a DVD (digital versatile disc) or a Blu-Ray disc. As explained above, the computer program product could also be embodied in a memory of a device, such as the computer program products 64, 74 of Fig 1. While the computer program 91 is here schematically shown as a track on the depicted optical disk, the computer program can be stored in any way which is suitable for the computer program product, such as a removable solid-state memory, e.g. a Universal Serial Bus (USB) drive.

By shaping traffic as presented herein, the fronthaul link can be better utilised. Peaks in capacity requirements can be reduced, resulting in lower capacity requirements on the fronthaul link, which leads to significantly reduced cost.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art. The various aspects and embodiments disclosed herein are for purposes of illustration and are not intended to be limiting. The scope of the disclosure is defined by the following claims.

## Claims

1. A method for controlling data on a full-duplex fronthaul link (21), the method being performed by an aggregator device (1) and comprising the steps of:
obtaining (40a) uplink data allocations per time period for at least two radio layers (22a-b), the at least two radio layers (22a-b) being time-division duplex, TDD, radio layers, and the at least two radio layers (22a-b) being transmitted from at least two radio devices (14a-b), wherein each radio layer represents a carrier, a MIMO, multiple input multiple output, layer, or a beam-forming layer;
aggregating (42a) uplink data allocations per time period (30a-c), yielding aggregated uplink TDD data;
when the uplink TDD data exceeds an uplink capacity of the full-duplex fronthaul link (21), shaping (44a) uplink data of at least one of the at least two radio layers (22a-b) for the full-duplex fronthaul link (21);
demultiplexing (46) downlink data received over the full-duplex fronthaul link (21) and forwarding the demultiplexed data to respective radio devices (14a-b); and
multiplexing (48) uplink data received from the at least two radio devices (14a-b) and forwarding the data on the full-duplex fronthaul link (21).

2. The method according to claim 1, further comprising the steps of:
obtaining (40b) downlink data allocations per time period (30a-c) for each one of the at least two radio layers (22a-b);
aggregating (42b) downlink data allocations per time period (30a-c), yielding aggregated downlink TDD data; and
when the downlink TDD data exceeds a downlink capacity of the full-duplex fronthaul link, shaping (44b) downlink data for at least one of the at least two radio layers (22a-b) for the full-duplex fronthaul link (21).

3. The method according to claim 1 or 2, wherein the shaping involves transmitting a shaping signal to a baseband device (3) to reschedule data allocations between time periods.

4. The method according to any one of the preceding claims, wherein the shaping involves buffering data in the aggregator device (1).

5. The method according to any one of the preceding claims, wherein the amount of data allocations is based on modulation and coding schemes used on the at least two TDD radio layers.

6. The method according to any one of the preceding claims, wherein the shaping comprises redistributing data over time to, to the greatest extent possible, fit data of the radio layers (22a-b) within the capacity of the full-duplex fronthaul link (21).

7. An aggregator device (1) for controlling data on a full-duplex fronthaul link (21), the aggregator device (1) comprising:
a processor (60); and
a memory (64) storing instructions (67) that, when executed by the processor, cause the aggregator device (1) to:
obtain uplink data allocations per time period for at least two radio layers (22a-b), the at least two radio layers (22a-b) being time-division duplex, TDD, radio layers, and the at least two radio layers (22a-b) being transmitted from at least two radio devices (14a-b), wherein each radio layer represents a carrier, a MIMO, multiple input multiple output, layer, or a beam-forming layer;
aggregate uplink data allocations per time period (30a-c), yielding aggregated uplink TDD data;
when the uplink TDD data exceeds an uplink capacity of the full-duplex fronthaul link (21), shape uplink data of at least one of the at least two radio layers (22a-b) for the full-duplex fronthaul link (21);
demultiplex downlink data received over the full-duplex fronthaul link (21) and forwarding the demultiplexed data to respective radio devices (14a-b); and
multiplex uplink data received from at least two radio devices (14a-b) and forwarding the data on the full-duplex fronthaul link (21).

8. The aggregator device (1) according to claim 7, further comprising instructions (67) that, when executed by the processor, cause the aggregator device (1) to:
obtain downlink data allocations per time period (30a-c) for each one of the at least two radio layers (22a-b);
aggregate downlink data allocations per time period (30a-c), yielding aggregated downlink TDD data; and
when the downlink TDD data exceeds a downlink capacity of the full-duplex fronthaul link, shape downlink data for at least one of the at least two radio layers (22a-b) for the full-duplex fronthaul link (21).

9. The aggregator device (1) according to claim 7 or 8, wherein the shaping involves transmitting a shaping signal to a baseband device (3) to reschedule data allocations between time periods.

10. The aggregator device (1) according to any one of claims 7 to 9, wherein the shaping involves buffering data in the aggregator device (1).

11. The aggregator device (1) according to any one of claims 7 to 10, wherein the amount of data allocations is based on modulation and coding schemes used on the at least two TDD radio layers.

12. The aggregator device (1) according to any one of claims 7 to 11, wherein the shaping comprises redistributing data over time to, to the greatest extent possible, fit data of the radio layers (22a-b) within the capacity of the full-duplex fronthaul link (21).

13. A computer program (67, 91) for controlling data on a full-duplex fronthaul link (21), the computer program comprising computer program code which, when run on a aggregator device (1) causes the aggregator device (1) to:
obtain uplink data allocations per time period for at least two radio layers (22a-b), the at least two radio layers (22a-b) being time-division duplex, TDD, radio layers, and the at least two radio layers (22a-b) being transmitted from at least two radio devices (14a-b), wherein each radio layer represents a carrier, a MIMO, multiple input multiple output, layer, or a beam-forming layer;
aggregate uplink data allocations per time period (30a-ce), yielding aggregated uplink TDD data;
when the uplink TDD data exceeds an uplink capacity of the full-duplex fronthaul link (21), shape uplink data of at least one of the at least two radio layers (22a-b) for the full-duplex fronthaul link (21); and
demultiplex downlink data received over the full-duplex fronthaul link (21) and forwarding the demultiplexed data to respective radio devices (14a-b); and
multiplex uplink data received from at least two radio devices (14a-b) and forwarding the data on the full-duplex fronthaul link (21).

14. A computer program product (64, 90) comprising instructions which, when the program is executed by a computer, cause the computer to carry out the method of claim 1.

15. A method for controlling data on a full-duplex fronthaul link (21), the method being performed by a baseband device (3) and comprising the steps of:
obtaining (50) downlink data allocations per time period for at least two radio layers (22a-b), the at least two radio layers (22a-b) being time-division duplex, TDD, radio layers, and the at least two radio layers (22a-b) being transmitted from at least two radio devices (14a-b), wherein each radio layer represents a carrier, a MIMO, multiple input multiple output, layer, or a beam-forming layer;
aggregating (52) downlink data allocations per time period (30a-c), yielding aggregated downlink TDD data; and
when the downlink TDD data exceeds a downlink capacity of a full-duplex fronthaul link, shaping (54) downlink data from the radio layers of the at least two radio layers for the full-duplex fronthaul link; and
receiving (56) a shaping signal from the aggregator device (1) to reschedule data allocations between time periods.

16. The method according to claim 15, further comprising the steps of:
rescheduling (58) data allocations between time periods.

17. A baseband device (3) for controlling data on a full-duplex fronthaul link (21), the baseband device (3) comprising:
a processor (70); and
a memory (74) storing instructions (77) that, when executed by the processor, cause the baseband device (3) to:
obtain downlink data allocations per time period for at least two radio layers (22a-b), the at least two radio layers (22a-b) being time-division duplex, TDD, radio layers, and the at least two radio layers (22a-b) being transmitted from at least two radio devices (14a-b), wherein each radio layer represents a carrier, a MIMO, multiple input multiple output, layer, or a beam-forming layer;
aggregate downlink data allocations per time period (30a-c), yielding aggregated downlink TDD data; and
when the downlink TDD data exceeds a downlink capacity of a full-duplex fronthaul link, shape downlink data from the radio layers of the at least two radio layers for the full-duplex fronthaul link; and
receiving (56) a shaping signal from the aggregator device (1) to reschedule data allocations between time periods.

18. The baseband device (3) according to claim 17, further comprising instructions (77) that, when executed by the processor, cause the baseband device (3) to:
reschedule data allocations between time periods.

19. A computer program (77, 91) for controlling data on a full-duplex fronthaul link (21), the computer program comprising computer program code which, when run on a baseband device (3) causes the baseband device (3) to:
obtain downlink data allocations per time period for at least two radio layers (22a-b), the at least two radio layers (22a-b) being time-division duplex, TDD, radio layers, and the at least two radio layers (22a-b) being transmitted from at least two radio devices (14a-b), wherein each radio layer represents a carrier, a MIMO, multiple input multiple output, layer, or a beam-forming layer;
aggregate downlink data allocations per time period (30a-c), yielding aggregated downlink TDD data; and
when the downlink TDD data exceeds a downlink capacity of a full-duplex fronthaul link, shape downlink data from the radio layers of the at least two radio layers for the full-duplex fronthaul link; and
receiving (56) a shaping signal from the aggregator device (1) to reschedule data allocations between time periods.

20. A computer program product (74, 90) comprising instructions which, when the program is executed by a computer, cause the computer to carry out the method of claim 15.

## Patentansprüche

1. Verfahren zum Steuern von Daten auf einer Vollduplex-Fronthaul-Verbindung (21), wobei das Verfahren durch eine Aggregatorvorrichtung (1) durchgeführt wird und die folgenden Schritte umfasst:
Erlangen (40a) von Uplink-Datenzuweisungen pro Zeitraum für mindestens zwei Funkschichten (22a-b), wobei die mindestens zwei Funkschichten (22a-b) Zeitduplexfunkschichten, TDD-Funkschichten, sind und die mindestens zwei Funkschichten (22ab) aus mindestens zwei Funkvorrichtungen (14a-b) übertragen werden, wobei jede Funkschicht einen Träger, eine Multiple-Input-Multiple-Output-Schicht, MIMO-Schicht, oder eine Strahlformungsschicht darstellt;
Aggregieren (42a) von Uplink-Datenzuweisungen pro Zeitraum (30a-c), was aggregierte Uplink-TDD-Daten erschafft;
wenn die Uplink-TDD-Daten ein Uplink-Vermögen der Vollduplex-Fronthaul-Verbindung (21) überschreiten, Bilden (44a) von Uplink-Daten mindestens einer der mindestens zwei Funkschichten (22a-b) für die Vollduplex-Fronthaul-Verbindung (21) ;
Demultiplexen (46) von Downlink-Daten, die über die Vollduplex-Fronthaul-Verbindung (21) empfangen werden, und Weiterleiten der gedemultiplexten Daten an jeweilige Funkvorrichtungen (14a-b); und
Multiplexen (48) von Uplink-Daten, die von den mindestens zwei Funkvorrichtungen (14a-b) empfangen werden, und Weiterleiten der Daten auf der Vollduplex-Fronthaul-Verbindung (21) .

2. Verfahren nach Anspruch 1, ferner umfassend die folgenden Schritte:
Erlangen (40b) von Downlink-Datenzuweisungen pro Zeitraum (30a-c) für jede der mindestens zwei Funkschichten (22a-b);
Aggregieren (42b) von Downlink-Datenzuweisungen pro Zeitraum (30a-c), was aggregierte Downlink-TDD-Daten erschafft; und
wenn die Downlink-TDD-Daten ein Downlink-Vermögen der Vollduplex-Fronthaul-Verbindung überschreiten, Bilden (44b) von Downlink-Daten für mindestens eine der mindestens zwei Funkschichten (22a-b) für die Vollduplex-Fronthaul-Verbindung (21).

3. Verfahren nach Anspruch 1 oder 2, wobei das Bilden Übertragen eines Bildungssignals an eine Basisbandvorrichtung (3) beinhaltet, um Datenzuweisungen zwischen Zeiträumen erneut zu planen.

4. Verfahren nach einem der vorhergehenden Ansprüche, wobei das Bilden Puffern von Daten in der Aggregatorvorrichtung (1) beinhaltet.

5. Verfahren nach einem der vorhergehenden Ansprüche, wobei die Anzahl an Datenzuweisungen auf Modulations-und-Codierungsschemata basiert, die auf den mindestens zwei TDD-Funkschichten verwendet werden.

6. Verfahren nach einem der vorhergehenden Ansprüche, wobei das Bilden Umverteilen von Daten über die Zeit umfasst, um im größten möglichen Ausmaß zu Daten der Funkschichten (22a-b) innerhalb des Vermögens der Vollduplex-Fronthaul-Verbindung (21) zu passen.

7. Aggregatorvorrichtung (1) zum Steuern von Daten auf einer Vollduplex-Fronthaul-Verbindung (21), wobei die Aggregatorvorrichtung (1) Folgendes umfasst:
einen Prozessor (60); und
einen Speicher (64), der Anweisungen (67) speichert, die, wenn sie durch den Prozessor ausgeführt werden, die Aggregatorvorrichtung (1) zu Folgendem veranlassen:
Erlangen von Uplink-Datenzuweisungen pro Zeitraum für mindestens zwei Funkschichten (22a-b), wobei die mindestens zwei Funkschichten (22a-b) Zeitduplexfunkschichten, TDD-Funkschichten, sind und die mindestens zwei Funkschichten (22ab) aus mindestens zwei Funkvorrichtungen (14a-b) übertragen werden, wobei jede Funkschicht einen Träger, eine Multiple-Input-Multiple-Output-Schicht, MIMO-Schicht, oder eine Strahlformungsschicht darstellt;
Aggregieren von Uplink-Datenzuweisungen pro Zeitraum (30a-c), was aggregierte Uplink-TDD-Daten erschafft;
wenn die Uplink-TDD-Daten ein Uplink-Vermögen der Vollduplex-Fronthaul-Verbindung (21) überschreiten, Bilden von Uplink-Daten mindestens einer der mindestens zwei Funkschichten (22a-b) für die Vollduplex-Fronthaul-Verbindung (21);
Demultiplexen von Downlink-Daten, die über die Vollduplex-Fronthaul-Verbindung (21) empfangen werden, und Weiterleiten der gedemultiplexten Daten an jeweilige Funkvorrichtungen (14a-b); und
Multiplexen von Uplink-Daten, die von mindestens zwei Funkvorrichtungen (14a-b) empfangen werden, und Weiterleiten der Daten auf der Vollduplex-Fronthaul-Verbindung (21).

8. Aggregatorvorrichtung (1) nach Anspruch 7, ferner umfassend Anweisungen (67), die, wenn sie durch den Prozessor ausgeführt werden, die Aggregatorvorrichtung (1) zu Folgendem veranlassen:
Erlangen von Downlink-Datenzuweisungen pro Zeitraum (30a-c) für jede der mindestens zwei Funkschichten (22a-b);
Aggregieren von Downlink-Datenzuweisungen pro Zeitraum (30a-c), was aggregierte Downlink-TDD-Daten erschafft; und
wenn die Downlink-TDD-Daten ein Downlink-Vermögen der Vollduplex-Fronthaul-Verbindung überschreiten, Bilden von Downlink-Daten für mindestens eine der mindestens zwei Funkschichten (22a-b) für die Vollduplex-Fronthaul-Verbindung (21) .

9. Aggregatorvorrichtung (1) nach Anspruch 7 oder 8, wobei das Bilden Übertragen eines Bildungssignals an eine Basisbandvorrichtung (3) beinhaltet, um Datenzuweisungen zwischen Zeiträumen erneut zu planen.

10. Aggregatorvorrichtung (1) nach einem der Ansprüche 7 bis 9, wobei das Bilden Puffern von Daten in der Aggregatorvorrichtung (1) beinhaltet.

11. Aggregatorvorrichtung (1) nach einem der Ansprüche 7 bis 10, wobei die Anzahl an Datenzuweisungen auf Modulations-und-Codierungsschemata basiert, die auf den mindestens zwei TDD-Funkschichten verwendet werden.

12. Aggregatorvorrichtung (1) nach einem der Ansprüche 7 bis 11, wobei das Bilden Umverteilen von Daten über die Zeit umfasst, um im größten möglichen Ausmaß zu Daten der Funkschichten (22ab) innerhalb des Vermögens der Vollduplex-Fronthaul-Verbindung (21) zu passen.

13. Computerprogramm (67, 91) zum Steuern von Daten auf einer Vollduplex-Fronthaul-Verbindung (21), wobei das Computerprogramm einen Computerprogrammcode umfasst, der, wenn er auf einer Aggregatorvorrichtung (1) ausgeführt wird, die Aggregatorvorrichtung (1) zu Folgendem veranlasst:
Erlangen von Uplink-Datenzuweisungen pro Zeitraum für mindestens zwei Funkschichten (22a-b), wobei die mindestens zwei Funkschichten (22a-b) Zeitduplexfunkschichten, TDD-Funkschichten, sind und die mindestens zwei Funkschichten (22ab) aus mindestens zwei Funkvorrichtungen (14a-b) übertragen werden, wobei jede Funkschicht einen Träger, eine Multiple-Input-Multiple-Output-Schicht, MIMO-Schicht, oder eine Strahlformungsschicht darstellt;
Aggregieren von Uplink-Datenzuweisungen pro Zeitraum (30a-ce), was aggregierte Uplink-TDD-Daten erschafft;
wenn die Uplink-TDD-Daten ein Uplink-Vermögen der Vollduplex-Fronthaul-Verbindung (21) überschreiten, Bilden von Uplink-Daten mindestens einer der mindestens zwei Funkschichten (22a-b) für die Vollduplex-Fronthaul-Verbindung (21); und
Demultiplexen von Downlink-Daten, die über die Vollduplex-Fronthaul-Verbindung (21) empfangen werden, und Weiterleiten der gedemultiplexten Daten an jeweilige Funkvorrichtungen (14a-b); und
Multiplexen von Uplink-Daten, die von mindestens zwei Funkvorrichtungen (14a-b) empfangen werden, und Weiterleiten der Daten auf der Vollduplex-Fronthaul-Verbindung (21).

14. Computerprogrammprodukt (64, 90), umfassend Anweisungen, die, wenn das Programm durch einen Computer ausgeführt wird, den Computer dazu veranlassen, das Verfahren nach Anspruch 1 durchzuführen.

15. Verfahren zum Steuern von Daten auf einer Vollduplex-Fronthaul-Verbindung (21), wobei das Verfahren durch eine Basisbandvorrichtung (3) durchgeführt wird und die folgenden Schritte umfasst:
Erlangen (50) von Downlink-Datenzuweisungen pro Zeitraum für mindestens zwei Funkschichten (22a-b), wobei die mindestens zwei Funkschichten (22a-b) Zeitduplexfunkschichten, TDD-Funkschichten, sind und die mindestens zwei Funkschichten (22ab) aus mindestens zwei Funkvorrichtungen (14a-b) übertragen werden, wobei jede Funkschicht einen Träger, eine Multiple-Input-Multiple-Output-Schicht, MIMO-Schicht, oder eine Strahlformungsschicht darstellt;
Aggregieren (52) von Downlink-Datenzuweisungen pro Zeitraum (30a-c), was aggregierte Downlink-TDD-Daten erschafft; und
wenn die Downlink-TDD-Daten ein Downlink-Vermögen einer Vollduplex-Fronthaul-Verbindung überschreiten, Bilden (54) von Downlink-Daten aus den Funkschichten der mindestens zwei Funkschichten für die Vollduplex-Fronthaul-Verbindung; und
Empfangen (56) eines Bildungssignals von der Aggregatorvorrichtung (1), um Datenzuweisungen zwischen Zeiträumen erneut zu planen.

16. Verfahren nach Anspruch 15, ferner umfassend die folgenden Schritte:
erneutes Planen (58) von Datenzuweisungen zwischen Zeiträumen.

17. Basisbandvorrichtung (3) zum Steuern von Daten auf einer Vollduplex-Fronthaul-Verbindung (21), wobei die Basisbandvorrichtung (3) Folgendes umfasst:
einen Prozessor (70); und
einen Speicher (74), der Anweisungen (77) speichert, die, wenn sie durch den Prozessor ausgeführt werden, die Basisbandvorrichtung (3) zu Folgendem veranlassen:
Erlangen von Downlink-Datenzuweisungen pro Zeitraum für mindestens zwei Funkschichten (22a-b), wobei die mindestens zwei Funkschichten (22a-b) Zeitduplexfunkschichten, TDD-Funkschichten, sind und die mindestens zwei Funkschichten (22ab) aus mindestens zwei Funkvorrichtungen (14a-b) übertragen werden, wobei jede Funkschicht einen Träger, eine Multiple-Input-Multiple-Output-Schicht, MIMO-Schicht, oder eine Strahlformungsschicht darstellt;
Aggregieren von Downlink-Datenzuweisungen pro Zeitraum (30a-c), was aggregierte Downlink-TDD-Daten erschafft; und
wenn die Downlink-TDD-Daten ein Downlink-Vermögen einer Vollduplex-Fronthaul-Verbindung überschreiten, Bilden von Downlink-Daten aus den Funkschichten der mindestens zwei Funkschichten für die Vollduplex-Fronthaul-Verbindung; und
Empfangen (56) eines Bildungssignals von der Aggregatorvorrichtung (1), um Datenzuweisungen zwischen Zeiträumen erneut zu planen.

18. Basisbandvorrichtung (3) nach Anspruch 17, ferner umfassend Anweisungen (77), die, wenn sie durch den Prozessor ausgeführt werden, die Basisbandvorrichtung (3) zu Folgendem veranlassen:
erneutem Planen von Datenzuweisungen zwischen Zeiträumen.

19. Computerprogramm (77, 91) zum Steuern von Daten auf einer Vollduplex-Fronthaul-Verbindung (21), wobei das Computerprogramm einen Computerprogrammcode umfasst, der, wenn er auf einer Basisbandvorrichtung (3) ausgeführt wird, die Basisbandvorrichtung (3) zu Folgendem veranlasst:
Erlangen von Downlink-Datenzuweisungen pro Zeitraum für mindestens zwei Funkschichten (22a-b), wobei die mindestens zwei Funkschichten (22a-b) Zeitduplexfunkschichten, TDD-Funkschichten, sind und die mindestens zwei Funkschichten (22ab) aus mindestens zwei Funkvorrichtungen (14a-b) übertragen werden, wobei jede Funkschicht einen Träger, eine Multiple-Input-Multiple-Output-Schicht, MIMO-Schicht, oder eine Strahlformungsschicht darstellt;
Aggregieren von Downlink-Datenzuweisungen pro Zeitraum (30a-c), was aggregierte Downlink-TDD-Daten erschafft; und
wenn die Downlink-TDD-Daten ein Downlink-Vermögen einer Vollduplex-Fronthaul-Verbindung überschreiten, Bilden von Downlink-Daten aus den Funkschichten der mindestens zwei Funkschichten für die Vollduplex-Fronthaul-Verbindung; und
Empfangen (56) eines Bildungssignals von der Aggregatorvorrichtung (1), um Datenzuweisungen zwischen Zeiträumen erneut zu planen.

20. Computerprogrammprodukt (74, 90), umfassend Anweisungen, die, wenn das Programm durch einen Computer ausgeführt wird, den Computer dazu veranlassen, das Verfahren nach Anspruch 15 durchzuführen.

## Revendications

1. Procédé de commande de données sur une liaison fronthaul en duplex intégral (21), le procédé étant mis en œuvre par un dispositif d'agrégation (1) et comprenant les étapes consistant à :
obtenir (40a) des allocations de données de liaison montante par période de temps pour au moins deux couches radio (22a-b), les au moins deux couches radio (22a-b) étant des couches radio duplex à répartition temporelle, TDD, et les au moins deux couches radio (22a-b) étant transmises à partir d'au moins deux dispositifs radio (14a-b), dans lequel chaque couche radio représente une porteuse, une couche à entrées et sorties multiples, MIMO, ou une couche de formation de faisceaux ;
agréger (42a) des allocations de données de liaison montante par période de temps (30a-c), produisant des données TDD de liaison montante agrégées ;
lorsque les données TDD de liaison montante dépassent la capacité de liaison montante de la liaison fronthaul en duplex intégral (21), mettre en forme (44a) les données de liaison montante d'au moins une des au moins deux couches radio (22a-b) pour la liaison fronthaul en duplex intégral (21) ;
démultiplexer (46) des données de liaison descendante reçues sur la liaison fronthaul en duplex intégral (21) et transférer les données démultiplexées à des dispositifs radio respectifs (14a-b) ; et
multiplexer (48) des données de liaison montante reçues des au moins deux dispositifs radio (14a-b) et transférer les données sur la liaison fronthaul en duplex integral (21).

2. Procédé selon la revendication 1, comprenant en outre les étapes consistant à :
obtenir (40b) allocations de données de liaison descendante par période de temps (30a-c) pour chacune des au moins deux couches radio (22a-b) ;
agréger (42b) des allocations de données de liaison descendante par période de temps (30a-c), produisant des données TDD de liaison descendante agrégées ; et
lorsque les données TDD de liaison descendante dépassent la capacité de liaison descendante de la liaison fronthaul en duplex intégral, mettre en forme (44b) des données de liaison descendante pour au moins une des au moins deux couches radio (22a-b) pour la liaison fronthaul en duplex intégral (21).

3. Procédé selon la revendication 1 ou 2, dans lequel la mise en forme implique la transmission d'un signal de mise en forme à un dispositif de bande de base (3) pour reprogrammer les allocations de données entre les périodes de temps.

4. Procédé selon l'une quelconque des revendications précédentes, dans lequel la mise en forme implique la mise en mémoire tampon des données dans le dispositif d'agrégation (1).

5. Procédé selon l'une quelconque des revendications précédentes, dans lequel la quantité de données allouées est basée sur des schémas de modulation et de codage utilisés sur les au moins deux couches radio TDD.

6. Procédé selon l'une quelconque des revendications précédentes, dans lequel la mise en forme comprend la redistribution des données au fil du temps afin, dans la mesure du possible, d'adapter les données des couches radio (22a-b) à la capacité de la liaison fronthaul en duplex intégral (21).

7. Dispositif d'agrégation (1) pour commander des données sur une liaison fronthaul en duplex intégral (21), le dispositif d'agrégation (1) comprenant :
un processeur (60) ; et
une mémoire (64) stockant des instructions (67) qui, lorsqu'elles sont exécutées par le processeur, amènent le dispositif d'agrégation (1) à :
obtenir des allocations de données de liaison montante par période de temps pour au moins deux couches radio (22a-b), les au moins deux couches radio (22a-b) étant des couches radio duplex à répartition temporelle, TDD, et les au moins deux couches radio (22a-b) étant transmises à partir d'au moins deux dispositifs radio (14a-b), dans lequel chaque couche radio représente une porteuse, une couche à entrées et sorties multiples, MIMO, ou une couche de formation de faisceaux ;
agréger des allocations de données de liaison montante par période de temps (30a-c), produisant des données TDD de liaison montante agrégées ;
lorsque les données TDD de liaison montante dépassent la capacité de liaison montante de la liaison fronthaul en duplex intégral (21), mettre en forme les données de liaison montante d'au moins une des au moins deux couches radio (22a-b) pour la liaison fronthaul en duplex intégral (21) ;
démultiplexer des données de liaison descendante reçues via la liaison fronthaul en duplex intégral (21) et transférer les données démultiplexées aux dispositifs radio respectifs (14a-b) ; et
multiplexer des données de liaison montante reçues d'au moins deux dispositifs radio (14a-b) et transférer les données sur la liaison fronthaul en duplex intégral (21).

8. Dispositif d'agrégation (1) selon la revendication 7, comprenant en outre des instructions (67) qui, lorsqu'elles sont exécutées par le processeur, amènent le dispositif d'agrégation (1) à :
obtenir des allocations de données de liaison descendante par période de temps (30a-c) pour chacune des au moins deux couches radio (22a-b) ;
agréger des allocations de données de liaison descendante par période de temps (30a-c), produisant des données TDD de liaison descendante agrégées ; et
lorsque les données TDD de liaison descendante dépassent la capacité de liaison descendante de la liaison fronthaul en duplex intégral, mettre en forme les données de liaison descendante pour au moins une des au moins deux couches radio (22a-b) pour la liaison fronthaul en duplex intégral (21).

9. Dispositif d'agrégation (1) selon la revendication 7 ou 8, dans lequel la mise en forme implique la transmission d'un signal de mise en forme à un dispositif de bande de base (3) pour reprogrammer les allocations de données entre les périodes de temps.

10. Dispositif d'agrégation (1) selon l'une quelconque des revendications 7 à 9, dans lequel la mise en forme implique la mise en mémoire tampon des données dans le dispositif d'agrégation (1).

11. Dispositif d'agrégation (1) selon l'une quelconque des revendications 7 à 10, dans lequel la quantité d'allocations de données est basée sur des schémas de modulation et de codage utilisés sur les au moins deux couches radio TDD.

12. Dispositif d'agrégation (1) selon l'une quelconque des revendications 7 à 11, dans lequel la mise en forme comprend la redistribution des données au fil du temps afin, dans la mesure du possible, d'adapter les données des couches radio (22a-b) à la capacité de la liaison fronthaul en duplex intégral (21).

13. Programme informatique (67, 91) permettant de commander des données sur une liaison fronthaul en duplex intégral (21), le programme informatique comprenant un code informatique qui, lorsqu'il est exécuté sur un dispositif d'agrégation (1), amène le dispositif d'agrégation (1) à :
obtenir des allocations de données de liaison montante par période de temps pour au moins deux couches radio (22a-b), les au moins deux couches radio (22a-b) étant des couches radio duplex à répartition temporelle, TDD, et les au moins deux couches radio (22a-b) étant transmises à partir d'au moins deux dispositifs radio (14a-b), dans lequel chaque couche radio représente une porteuse, une couche à entrées et sorties multiples, MIMO, ou une couche de formation de faisceaux ;
agréger des allocations de données de liaison montante par période de temps (30a-ce), produisant des données TDD de liaison montante agrégées ;
lorsque les données TDD de liaison montante dépassent la capacité de liaison montante de la liaison fronthaul en duplex intégral (21), mettre en forme les données de liaison montante d'au moins une des au moins deux couches radio (22a-b) pour la liaison fronthaul en duplex intégral (21) ; et
démultiplexer les données de liaison descendante reçues via la liaison fronthaul en duplex intégral (21) et transférer les données démultiplexées aux dispositifs radio respectifs (14a-b) ; et
multiplexer les données de liaison montante reçues d'au moins deux dispositifs radio (14a-b) et transférer les données sur la liaison fronthaul en duplex intégral (21).

14. Produit de programme informatique (64, 90) comprenant des instructions qui, lorsque le programme est exécuté par un ordinateur, amènent l'ordinateur à mettre en œuvre le procédé selon la revendication 1.

15. Procédé de commande de données sur une liaison fronthaul en duplex intégral (21), le procédé étant mis en œuvre par un dispositif de bande de base (3) et comprenant les étapes consistant à :
obtenir (50) des allocations de données de liaison descendante par période de temps pour au moins deux couches radio (22a-b), les au moins deux couches radio (22a-b) étant des couches radio duplex à répartition temporelle, TDD, et les au moins deux couches radio (22a-b) étant transmises à partir d'au moins deux dispositifs radio (14a-b), dans lequel chaque couche radio représente une porteuse, une couche à entrées et sorties multiples, MIMO, ou une couche de formation de faisceaux ;
agréger (52) des allocations de données de liaison descendante par période de temps (30a-c), produisant des données TDD de liaison descendante agrégées ; et
lorsque les données TDD de liaison descendante dépassent la capacité de liaison descendante d'une liaison fronthaul en duplex intégral, mettre en forme (54) les données de liaison descendante des couches radio des au moins deux couches radio pour la liaison fronthaul en duplex intégral ; et
recevoir (56) un signal de mise en forme du dispositif d'agrégation (1) pour reprogrammer les allocations de données entre les périodes de temps.

16. Procédé selon la revendication 15, comprenant en outre les étapes consistant à :
reprogrammer (58) des allocations de données entre les périodes de temps.

17. Dispositif de bande de base (3) pour la commande de données sur une liaison fronthaul en duplex intégral (21), le dispositif de bande de base (3) comprenant :
un processeur (70); et
une mémoire (74) stockant des instructions (77) qui, lorsqu'elles sont exécutées par le processeur, amènent le dispositif de bande de base (3) à :
obtenir des allocations de données de liaison descendante par période de temps pour au moins deux couches radio (22a-b), les au moins deux couches radio (22a-b) étant des couches radio duplex à répartition temporelle, TDD, et les au moins deux couches radio (22a-b) étant transmises à partir d'au moins deux dispositifs radio (14a-b), dans lequel chaque couche radio représente une porteuse, une couche à entrées et sorties multiples, MIMO, ou une couche de formation de faisceaux ;
agréger des allocations de données de liaison descendante par période de temps (30a-c), produisant des données TDD de liaison descendante agrégées ; et
lorsque les données TDD de liaison descendante dépassent la capacité de liaison descendante d'une liaison fronthaul en duplex intégral, mettre en forme les données de liaison descendante provenant des couches radio des au moins deux couches radio de la liaison fronthaul en duplex intégral ; et
recevoir (56) un signal de mise en forme du dispositif d'agrégation (1) pour reprogrammer les allocations de données entre les périodes de temps.

18. Dispositif de bande de base (3) selon la revendication 17, comprenant en outre des instructions (77) qui, lorsqu'elles sont exécutées par le processeur, amènent le dispositif de bande de base (3) à :
reprogrammer des allocations de données entre les périodes de temps.

19. Programme informatique (77, 91) pour la commande de données sur une liaison fronthaul en duplex intégral (21), le programme informatique comprenant un code informatique qui, lorsqu'il est exécuté sur un dispositif de bande de base (3), amène le dispositif de bande de base (3) à :
obtenir des allocations de données de liaison descendante par période de temps pour au moins deux couches radio (22a-b), les au moins deux couches radio (22a-b) étant des couches radio duplex à répartition temporelle, TDD, et les au moins deux couches radio (22a-b) étant transmises à partir d'au moins deux dispositifs radio (14a-b), dans lequel chaque couche radio représente une porteuse, une couche à entrées et sorties multiples, MIMO, ou une couche de formation de faisceaux ;
agréger des allocations de données de liaison descendante par période de temps (30a-c), produisant des données TDD de liaison descendante agrégées ; et
lorsque les données TDD de liaison descendante dépassent la capacité de liaison descendante d'une liaison fronthaul en duplex intégral, mettre en forme les données de liaison descendante provenant des couches radio des au moins deux couches radio de la liaison fronthaul en duplex intégral ; et
recevoir (56) un signal de mise en forme du dispositif d'agrégation (1) pour reprogrammer les allocations de données entre les périodes de temps.

20. Produit de programme informatique (74, 90) comprenant des instructions qui, lorsque le programme est exécuté par un ordinateur, amènent l'ordinateur à mettre en œuvre le procédé selon la revendication 15.
